# EUROPÄISCHE PATENTSCHRIFT

(11) **EP 3 797 891 B1**
(45) Veröffentlichungstag und Bekanntmachung des Hinweises auf die Patenterteilung: **02.08.2023**
(21) Anmeldenummer: 19306242.9
(22) Anmeldetag: 30.09.2019
(51) Int. Cl.: B21C 37/08, B23K 26/262, B21D 13/00, F28F 1/00

(54) **VERFAHREN ZUR KONTINUIERLICHEN HERSTELLUNG ABSCHNITTSWEISE GEWELLTER, DÜNNWANDIGER HOHLPROFILE KLEINER DURCHMESSER AUS NE-METALLEN**
METHOD FOR THE CONTINUOUS PRODUCTION OF THIN-WALLED HOLLOW PROFILES WITH SMALL DIAMETERS, CORRUGATED IN SECTIONS AND MADE FROM NON-FERROUS METALS
PROCÉDÉ DE FABRICATION EN CONTINU DE PROFILÉS CREUX, ONDULÉS PAR SECTIONS, MINCES, DE PETIT DIAMÈTRE EN METAL NON FERREUX

(43) Veröffentlichungstag der Anmeldung: 31.03.2021
(73) Patentinhaber: Nexans, 92400 Courbevoie (FR)
(72) Erfinder: EGERER, Ralf, 30177 HANNOVER (DE); DINKEL, Steven, 30625 HANNOVER (DE); PETERSEN, Olaf, 30177 HANNOVER (DE)
(74) Vertreter: Ipsilon

(56) Entgegenhaltungen:
- EP-A1- 0 636 432
- EP-A1- 1 121 991
- EP-A1- 1 160 046
- WO-A1-2017/190042
- US-A- 3 610 863
- US-A- 5 515 603

## Beschreibung

### Gebiet

Die Erfindung betrifft die kontinuierliche Herstellung von Rohren bzw. Hohlprofilen aus NE-Metallen, insbesondere die kontinuierliche Herstellung von abschnittsweise gewellten dünnwandigen Rohren mit kleinen Durchmessern.

### Hintergrund

Zur Erstellung von Rohrleitungssystemen sind neben geraden Abschnitten unter anderem auch gebogene Abschnitte erforderlich. Üblicherweise werden gerade und gebogene Rohrsegmente entsprechend des Verlaufs der Rohrleitung stirnseitig miteinander stumpf verschweißt, mit einer Muffe durch Verpressen oder Löten verbunden, oder auf andere Weise zusammengefügt.

Für manche Anwendungen werden gewellte Rohrsegmente benötigt, bspw. in Wärmetauschern, wo durch die Wellung eine Vergrößerung der Oberfläche erreicht wird, oder wenn ein Rohrsegment leichter aus seiner Längsachse heraus biegbar sein soll, ohne dass es bei dem Biegen zu einer unerwünschten Verformung des Rohrquerschnitts kommt. Wellrohrsegmente kommen häufig auch zum Einsatz, wenn durch thermische Dehnung bedingte Längenänderungen oder mechanische Lasten ausgeglichen werden müssen.

Wellrohre können bspw. aus glattwandigen Rohren hergestellt werden, die in einem Weller oder Corrugator mit einer Parallel- oder Schraubenwellung versehen werden. Wenn Wellrohrsegmente mit glattwandigen Rohrabschnitten verbunden werden sollen, müssen die zu verbindenden Enden der Rohre glattwandig sein und vom Durchmesser zueinander passen, um eine Verbindung zu ermöglichen. Bei Wellrohrsegmenten müssen die Enden in einem aufwendigen Umformprozess also wieder zu einem glattwandigen Rundrohr ohne Wellung gewalzt werden, um Rohrstücke oder Flansche anschweißen zu können. Die Verbindung der Rohrsegmente erfolgt dann durch Schweißen, bspw. Wolfram-Inertgas-Schweißen (WIG) in einer über dem Umfang der Verbindungsstelle laufenden Naht. Alternativ kann die Verbindung je nach Anwendungsfall auch über Schrumpfschläuche, Muffen, Überwurfmuttern, Schneidringverschraubungen etc. erfolgen. All diesen Verbindungsvarianten gemeinsam ist, dass erst lange Rohre zu kürzeren Stücken vereinzelt werden, die anschließend wieder mehr oder weniger aufwendig zueinander ausgerichtet und zusammengefügt werden müssen.

Für Wärmetauscher sind insbesondere dünnwandige Rohre mit kleinen Durchmessern für einen guten Wärmeaustausch von großem Interesse, nicht zuletzt weil eine größere Anzahl von Rohren kleiner Durchmesser in einem festgelegten Volumen eines Wärmetauschers angeordnet werden können und so eine größere Oberfläche für den Wärmeaustausch zur Verfügung steht.

Bei der konventionellen Herstellung dünnwandiger Hohlprofile oder Rohre mit kleinen Durchmessern in einem kontinuierlichen Prozess wird zunächst ein geschlitztes Hohlprofil mit größeren Abmessungen, bspw. ein Schlitzrohr mit einem größeren Durchmesser, und ggf. einer größeren Wandstärke aus einem flachen Metallband gefertigt, bspw. durch entsprechend angeordnete Rollen und Profile. Anschließend werden die an dem Schlitz zusammentreffenden Kanten des zu dem Hohlprofil geformten Metallbands zusammengeschweißt, wobei üblicherweise ein Lichtbogenschweißverfahren zur Anwendung kommt. Das Lichtbogenschweißen erzeugt an der Innenseite des Rohres eine ausgeprägte Schweißwulst, die in das Rohrinnere hineinragt. Nach dem Schweißen muss daher die Schweißnaht an der Außen- und/oder Innenseite noch geglättet oder entgratet werden, oder die Wulst wird spanend entfernt, bevor das Rohr weiterbearbeitet werden kann. Um sicherzustellen, dass die Schweißnaht einheitlich ist, kann eine Reihe zerstörungsfreier Prüfungen durchgeführt werden, z. B. Wirbelstromprüfung, Ultraschallprüfung und Drucktests.

Ein solches Verfahren, bei dem ein dünnwandiges Metallband mittels paarweise zusammenarbeitenden Formrollen oder Formwalzen allmählich zu einem Schlitzrohr umgeformt wird, welches anschließend entlang des Schlitzes zu einem längsnahtverschweißten Rohr verarbeitet wird, ist beispielsweise aus der EP 1 121 991 A1 bekannt.

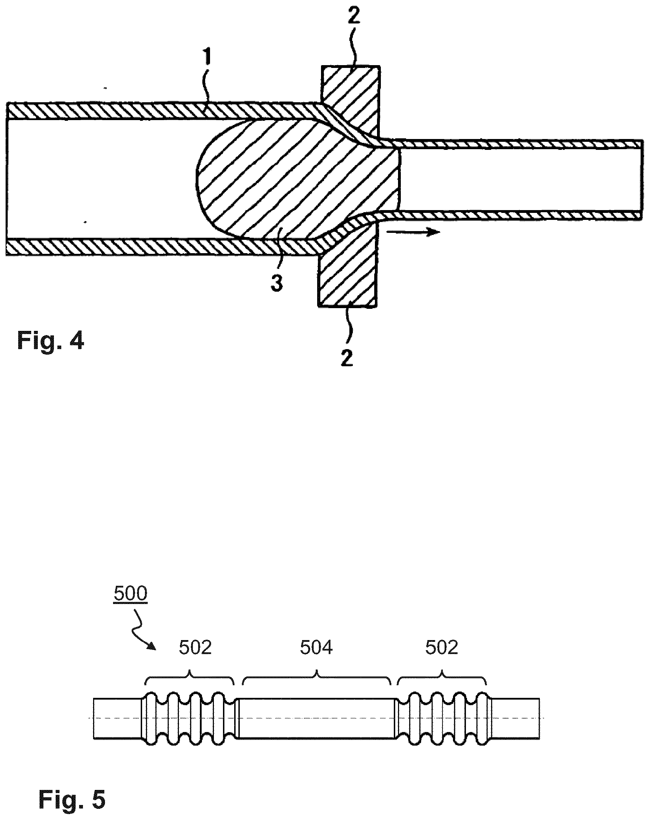

Genau wie bei der Herstellung nahtloser Rohre mit kleinem Durchmesser und/oder kleinen Wanddicken werden die geschweißten Rohre anschließend einem Ziehprozess unterzogen, bei dem mittels eines Dorns, Stopfens oder einer Mandrille die Wandstärke reduziert wird um einen kleineren Durchmesser und ggf. dünnere Wandstärken des Endprodukts zu erreichen. Insbesondere wegen der beim Lichtbogenschweißens großen Abmessungen der Schweißnaht und des daher erforderlichen großen Mindestdurchmessers des geschweißten Rohres sind ggf. mehrere Ziehprozesse mit höherem Umformgrad notwendig um kleine Querschnitte und dünnere Wandstärken zu erzielen. Rohrdurchmesser kleiner als 4 mm können mittels Lichtbogenschweißen nicht mehr sicher hergestellt werden. Wenn in einem ersten Ziehprozess zunächst nur die Wandstärke reduziert wurde muss anschließend der Durchmesser des Rohres verringert werden. Dazu kann das Rohr bspw. über einen fliegenden Stopfen und durch einen Ziehstein gezogen werden. Die Verringerung der Wandstärke und des Durchmessers kann jedoch auch in einem einzigen Ziehvorgang erfolgen. Beim Ziehen über einen Stopfen wird neben einer Verringerung der Wandstärke bzw. des Durchmessers auch die Schweißwulst auf der Innenseite geglättet. Eine weitere Verringerung des Durchmessers auf das gewünschte Endmaß kann in einem oder mehreren anschließenden Ziehprozessen erfolgen, wobei auf den Stopfen verzichtet werden kann, wenn keine weitere Verringerung der Wandstärke gefordert ist. Figur 4 zeigt eine schematische Darstellung der beim Stopfenziehen verwendeten Elemente. Beim Stopfenziehen wird ein Stopfen 3 innen in dem Rohr 1 positioniert, das dann durch eine Öffnung in einer Form 2 mit einem kleineren Durchmesser als der des ursprünglichen Rohres und der des Stopfens gezogen wird. Der Stopfen kann nicht durch das Rohr hindurchgezogen werden und verschiebt sich relativ zu dem Rohr - tatsächlich bleibt er vor der Öffnung stehen, während das Rohr zwischen der Öffnung und dem Stopfen hindurchgezogen wird und dabei sein Durchmesser und seine Wanddicke verringert werden. Dabei kann das Rohr zusätzlich zu der Erwärmung aufgrund der Verformung vorgewärmt werden, um die Duktilität des Materials beim Ziehen zu erhöhen. Im Innern des Rohres kann ein Ziehmittel eingebracht sein das die Reibung des Stopfens reduziert. Der Prozess kann mehrfach mit abnehmenden Durchmessern wiederholt werden. Wenn die Kaltverfestigung des Werkstoffes das gewünschte oder vom Werkstoff erträgliche Maß übersteigt, kann ein Glühschritt eingefügt werden, bei dem vor einem anschließenden Ziehvorgang die gezogenen Rohre entfettet, geglüht und für den nächsten Ziehvorgang entzundert und angespitzt werden. Das Glühen homogenisiert das metallurgische Mikrogefüge des Rohres. Da das Korngefüge eines Rohres nach dem Ziehen gestört ist, es kommt insbesondere zum Aufstauen von Versetzungen, wird das Material hart und spröde, man spricht von Kaltverfestigung oder Verformungsverfestigung. Um die gezogenen Rohre nochmals ziehen zu können müssen die Störungen im Gefüge aufgehoben und die Eigenspannungen abgebaut werden, damit das Material wieder in seinen ursprünglichen Zustand versetzt wird. Beim Glühen werden die gezogenen Rohre einer kontrollierten Temperatur - Materialabhängig bis zu 1200°C - und Glühzeit ausgesetzt. Während dieses Vorgangs behält das Rohr zumindest bei einfachen Querschnitten üblicherweise seine Form, aber die Körner im Mikrogefüge des Rohres bilden wieder ein normales unbelastetes Muster. Je nach Glühtemperatur werden Eigenspannungen und Gefügefehler wie Versetzungen durch Kristallerholung, also Versetzungsbewegung, und Rekristallisation abgebaut. Das geglühte Rohr ist dann weicher und kann erneut gezogen werden. Je nach gewünschter Ziel-Härte ist für Hochdruckrohre eine abschließende Wärmebehandlung nicht erforderlich. Damit bleibt das Material im hartgezogenen Zustand und verbessert so die mechanischen Eigenschaften des Rohres. Sowohl geschweißte Rohre als auch lange nahtlose Rohre können so auf Ringrohrform gezogen werden, und es können sehr lange Ringrohre hergestellt werden.

Für bestimmte Anwendungen sind Rohre aus Nichteisenmetallen (NE-Metallen) besonders geeignet. Kupfer- oder Aluminiumrohre können bspw. wegen der hohen Wärmeleitfähigkeit in Wärmetauschern bevorzugt Anwendung finden. In Wärmetauschern werden Rohre mit kleinen Durchmessern und geringen Wandstärken benötigt, zum einen um den Wärmeübergang zwischen den Medien so wenig wie möglich zu behindern und die Wärmekapazität des Rohres selbst klein zu halten, zum anderen um Materialeinsatz und Gewicht gering zu halten. Insbesondere Wandstärken kleiner als 0,15 mm lassen sich mittels Lichtbogenschweißen nicht mehr prozesssicher und mit der erforderlichen Qualität der Schweißnaht herstellen. Rohre aus NE-Metallen mit kleineren als den genannten Wandstärken und Durchmessern müssen demnach zwingend durch sich an die eigentliche Rohrherstellung anschließende Verarbeitungsschritte auf das jeweils gewünschte Endmaß gebracht werden.

Grundsätzlich ist es von Vorteil, wenn einzelne Rohre möglichst als lange Teile herstellbar sind, um einen weitgehend kontinuierlichen Herstellungsprozess zu ermöglichen, der so selten wie möglich unterbrochen werden muss. Aus den langen Rohren können dann ggf. geforderte Teilstücke geschnitten werden, wobei wenn überhaupt nur ein kleiner Schnittrest übrigbleibt. Allgemein ist natürlich jede Einsparung von Prozessschritten bei der Herstellung vorteilhaft.

Es ist eine Aufgabe der vorliegenden Erfindung eine Vorrichtung und ein Verfahren vorzuschlagen, mittels derer in einem kontinuierlichen Prozess dünnwandige Rohre bzw. Hohlprofile hergestellt und selektiv abschnittsweise mit einer Schrauben- oder Parallelwellung versehen werden können.

### Zusammenfassung der Erfindung

Diese Aufgabe wird durch das in Anspruch 1 angegebene Verfahren und die in Anspruch 8 angegebene Vorrichtung gelöst. Weiterentwicklungen und Ausgestaltungen sind jeweils in den abhängigen Ansprüchen angegeben.

Bei dem erfindungsgemäßen Verfahren zur kontinuierlichen Herstellung dünnwandiger, abschnittsweise gewellter, radial geschlossener Hohlprofile wird zunächst ein flaches Band aus einem NE-Metall zugeführt, dessen Dicke der Wandstärke des herzustellenden Hohlprofils entspricht. Die Breite des zugeführten Metallbandes entspricht vorzugsweise bereits dem Umfang des Hohlprofils. Falls das zugeführte Metallband breiter ist als es der Umfang des Hohlprofils erfordert, oder falls die Kanten des Metallbandes nicht hinreichend glatt sind, kann das Metallband an einer oder zwei Seiten in einem kontinuierlichen Prozess während des Zuführens maßgerecht beschnitten werden. In der vorliegenden Beschreibung bezieht sich der Ausdruck "dünnwandig" auf Wandstärken von wenigen Zehntelmillimetern, insbesondere weniger als 0,15 mm. Der Begriff NE-Metall wird in dieser Beschreibung sowohl für die Metalle selbst als auch für deren Legierungen verwendet.

Das in der passenden Breite vorliegende Metallband wird in einem ein- oder mehrstufigen kontinuierlichen Umformprozess zu einem Hohlprofil geformt, welches den gewünschten Querschnitt aufweist. Der Umformprozess kann ein in mehreren Stufen nacheinander folgendes Biegen in Längsrichtung des Bandes umfassen, bspw. an entsprechend eingerichteten Rollen und Profilen. Das Hohlprofil weist nach dem Umformen einen in Längsrichtung des Hohlprofils verlaufenden Bereich auf, in dem die Kanten des Metallbandes bündig aneinander anliegen. Die bündig aneinander anliegenden Kanten des Hohlprofils werden nun entlang der Stoßkante miteinander verschweißt. Erfindungsgemäß erfolgt das Verschweißen mit einem Laser, der Licht mit einer Wellenlänge kleiner als 600 nm ausstrahlt, vorzugsweise in einem Bereich zwischen 550 und 450 nm. Auch Wellenlängen in einem Bereich unterhalb 450 nm können erfindungsgemäß vorteilhaft genutzt werden. Der Laser bringt Lichtenergie in einen Punkt in dem Schweißbereich ein, die beim Auftreffen auf die Oberfläche des Schweißgutes absorbiert und in Wärme umgewandelt wird. Licht in den erfindungsgemäß genutzten genannten Wellenlängenbereichen wird von vielen NE-Metallen schon bei Raumtemperatur sehr viel besser absorbiert als bspw. Licht im InfrarotSpektrum mit Wellenlängen oberhalb von etwa 800 nm. Tatsächlich wird Licht schon bei Wellenlängen oberhalb von etwa 600 nm von vielen NE-Metallen nur noch so schlecht absorbiert, so dass Laser mit besonders hohen Ausgangsleistungen und besondere Kühlmaßnahmen erforderlich wären, um das NE-Metall zu verschweißen. Darüber hinaus ist die Absorption bei Wellenlängen größer als 600 nm stark von der Beschaffenheit der Oberfläche abhängig, während der Einfluss der Oberflächenbeschaffenheit bei den erfindungsgemäß genutzten Wellenlängen stark zurückgeht. Zudem ist wegen der starken Temperaturabhängigkeit der Absorption gerade bei größeren Wellenlängen außerdem eine schnelle Regelung der in den aktiven Schweißbereich eingebrachten Energie erforderlich, was nahezu unmöglich zu implementieren ist, so dass die Qualität der Schweißnaht stark schwanken kann. Die erfindungsgemäße Verwendung von Licht mit Wellenlängen kleiner als 600 nm erzeugt ein stabileres Schmelzbad und führt zu einem insgesamt stabileren Prozess, der bei einem hohen energetischen Wirkungsgrad des Schweißprozesses längsnahtgeschweißte Hohlprofile mit einer hohen Qualität liefert und weniger Ausschuss produziert. Außerdem kann bei der erfindungsgemäß genutzten Wellenlänge kleiner als 600 nm eine Vorbereitung des Schweißbereichs entfallen, die eine Verringerung der Reflexion und dadurch eine Erhöhung der Absorption des Laserlichts bewirkt. Der Schweißbereich muss also nicht bspw. angeraut oder vorgeheizt werden, und es muss auch keine Schicht aus einem Stoff in dem Schweißbereich aufgebracht werden, welcher als "Vermittler" die eingestrahlte Lichtenergie in Wärme umwandelt und an das Schweißgut abgibt, so dass dessen temperaturabhängiger Absorptionsgrad in für die verwendete Wellenlänge günstigere Bereiche gelangt. Dadurch entfällt die Gefahr, dass Teile des als Vermittler verwendeten Stoffes in die Schweißnaht gelangen.

Das absorbierte Licht bewirkt eine starke Erwärmung des Metalls. Um eine ausreichend hohe Energie in das zu verschweißende Material einzubringen muss das Licht stark fokussiert werden. Eine starke Fokussierung ist auch deshalb erforderlich, weil das Verschweißen nur in dem Kontaktbereich der Kanten entlang des Schlitzes erfolgen soll. Aufgrund von Wärmeleitung innerhalb des NE-Metalls können unmittelbar an den Auftreffpunkt des Laserstrahls angrenzende Bereiche sich ebenfalls stark erwärmen und ggf. aufschmelzen. Gerade bei kleinen Querschnittsabmessungen der herzustellenden Hohlprofile, bspw. bei Durchmessern kleiner als 4 mm ist die Fokussierung des Laserstrahls daher von großer Bedeutung, um das unkontrollierte Abfließen von verflüssigtem Material bzw. einen Materialabriss zu vermeiden. Bei dem erfindungsgemäßen Verfahren weist der Laserstrahl am Werkstück einen Durchmesser von nicht mehr als 20% der Querschnittsabmessungen des Hohlprofils auf, vorzugsweise weniger als 10%. Versuche haben gezeigt, dass Durchmesser des Laserstrahls herunter bis zu 5% der Querschnittsabmessungen noch Schweißnähte mit einer guten Qualität ermöglichen können, wobei in diesem Fall weitere Maßnahmen erforderlich sein können, bspw. ein Bewegen des Fokuspunkts über den Schweißbereich. Bei einem Hohlprofil mit einem Durchmesser von 4 mm kann der Durchmesser des Laserstrahls demnach beispielsweise 400 µm betragen, vorzugsweise 200 µm oder weniger.

Die hohe lokale Energiedichte am Auftreffpunkt des Laserstrahls auf das Werkstück bewirkt ein lokales Aufschmelzen des Materials beiderseits der Stoßkante, so dass die Schmelzen ineinanderfließen. Das Material erstarrt wieder, wenn es nicht mehr von dem Laserstahl getroffen wird, und bildet die Schweißnaht. Da das Hohlprofil kontinuierlich an dem feststehenden Laser vorbeigeführt wird, wird eine kontinuierliche Schweißnaht erzeugt, die die beiden Kanten verbindet. Um unkontrolliertes Abfließen des flüssigen Materials zu verhindern, das ja in einer kleinen Wandstärke vorliegt, müssen die eingebrachte Laserleistung und die Geschwindigkeit, mit der das Rohr an dem Laser vorbeigeführt wird, aufeinander abgestimmt sein. Bei geeigneter Abstimmung ergeben sich an der Außen- wie an der Innenseite glatte Schweißnähte, die keiner Nachbearbeitung bedürfen.

Im Gegensatz zu dem bekannten Lichtbogenschweißen nach dem Wolfram-Inertgas-Verfahren (WIG) oder Metall-Inertgas-Verfahren (MIG), die ein Reagieren der Schmelze mit der Umgebungsluft durch die Intergas-Atmosphäre verhindern und dadurch hohe Nahtqualitäten ermöglichen, können bei dem bei der Erfindung genutzten Laserschweißen wegen der besseren Steuerbarkeit des Energieeintrags auch ohne Schutzgase NE-Metalle mit Materialdicken kleiner als 0,15 mm stumpf miteinander so verschweißt werden, dass keine Nachbearbeitung der Schweißnaht, insbesondere auf der Innenseite des Rohres erforderlich ist. Bei Ausgestaltungen des Verfahrens kann die Schweißstelle trotzdem mit einem inerten Schutzgas, bspw. Argon, innen und/oder außen umströmt oder abgedeckt werden. Die Nutzung einer Schutzgasatmosphäre kann u.a. von dem zu verschweißenden Material und dessen Stärke abhängig sein.

Die Steuerung des Energieeintrags durch den Laser kann entweder über die Fokussierung auf ein größeres Zielgebiet erfolgen, so dass eine zur Verfügung stehende Energie je nach Bedarf auf eine größere oder kleinere Fläche wirkt, oder durch geeignetes Hin- und Herbewegen eines besonders eng fokussierten Laserstrahls. Die Fokussierung auf ein größeres Zielgebiet kann auch durch ein Laserprofil gebildet werden, das einen zentralen Fokuspunkt großer Intensität und einen den zentralen Fokuspunkt umgebenden ringförmigen Bereich geringerer Intensität aufweist. Dadurch kann der Schweißbereich entlang eines Temperaturprofils erhitzt bzw. abgekühlt werden, wodurch sich eine sauberere Schweißnaht ergeben kann, und das Erstarrungsgefüge gezielt beeinflusst werden kann. Außerdem können Laserstrahlen auf einfache Weise gepulst werden, wobei eine Steuerung des Energieeintrags bspw. über die Pulsdauer und den Pulsabstand erfolgt.

Das Schweißen mittels Laser, auch Wärmeleitungsschweißen genannt, erzeugt eine glatte, abgerundete Schweißnaht, die nicht mehr nachbearbeitet werden muss. Die Energie verteilt sich beim Wärmeleitungsschweißen außerhalb des Bereichs in dem der Laser auftrifft nur durch Wärmeleitung in das Werkstück. Deshalb beträgt die Nahttiefe - abhängig von der Laserleistung und der Wärmeleitfähigkeit des Materials - nur einige Zehntelmillimeter bis etwa 1 Millimeter. Die Wärmeleitfähigkeit des Werkstoffs begrenzt dabei die maximale Nahttiefe. In der Regel ist die Nahtbreite größer als die Nahttiefe. Wenn die Wärme nicht schnell genug abfließen kann, steigt die Bearbeitungstemperatur über die Verdampfungstemperatur, so dass Metalldampf entsteht, und die Einschweißtiefe sprunghaft ansteigt. Der Prozess geht dann ins Tiefschweißen über.

Nach dem Verschweißen wird das Hohlprofil einem Weller oder Corrugator zugeführt, der in das Hohlprofil eine Schrauben- oder Parallelwellung einbringt. Der Weller oder Corrugator ist dabei für eine variable Zustellung des Wellwerkzeugs eingerichtet, so dass gewellte Rohrabschnitte selektiv eingebracht werden können, also Rohrabschnitte mit Wellung und glatte Rohrabschnitte im Wechsel vorliegen. Hierdurch ist es möglich, gewellte Abschnitte entlang des Rohres in den Bereichen zu platzieren, wo sonst gebogene Rohrstücke angeschweißt werden. Die durch die Wellung erzielte höhere Flexibilität des Rohres gegenüber einem glatten Rohr ermöglicht dabei die geforderte Richtungsänderung der Rohrachse an den vorgesehenen Stellen. Nicht gewellte Bereiche des Rohres bringen Steifigkeit wo sie gefordert wird. Sie erleichtern auch bspw. die Anbringung von Befestigungselementen oder die Abdichtung gegenüber Gehäuseelementen.

Die aufgrund des fein steuerbaren Energieeintrags in die Schweißstelle hohe Qualität der Schweißnaht des erfindungsgemäß hergestellten Rohres, die keine ausgeprägte Materialwulst entlang der Schweißnaht aufweist, ermöglicht den Verzicht auf eine aufwendige Nachbearbeitung vor dem Wellen, die gerade bei kleinen Rohrdurchmessern schwierig umzusetzen ist.

Bei einer oder mehreren Ausgestaltungen des Verfahrens wird die Breite des zugeführten Bandes gemessen und eine Schnittbreite in Abhängigkeit von dem Messergebnis und einem Vorgabewert nachgeführt. Die Breite entspricht etwa dem Umfang des Hohlprofils entlang der neutralen Faser. Dabei kann der Vorgabewert variiert und eine Umformvorrichtung entsprechend in Abhängigkeit von der variierenden Breite des Bandes angesteuert werden, bspw. um die für die Schweißnaht erforderliche Materialmenge anzupassen.

Bei Ausgestaltungen des Verfahrens wird ein Temperaturprofil quer zu der Schweißnaht gemessen. Das gemessene Temperaturprofil kann dazu genutzt werden, die in den Schweißpunkt eingebrachte Energie zu steuern. Das gemessene Temperaturprofil kann bspw. mit einem Vorgabeprofil verglichen werden, und die Steuerung der eingebrachten Energie kann eine Variation des Fokusdurchmessers, einer von dem Fokuspunkt auf dem Schweißgut beschriebenen Bahnkurve und/oder eine Veränderung der Pulsdauer und/oder des Pulsabstands des Laserstrahls umfassen. Es ist ebenfalls denkbar, die Zuführgeschwindigkeit in Abhängigkeit von dem gemessenen Temperaturprofil zu regeln. Das gemessene Temperaturprofil kann auch zu Qualitätsmanagements- und Dokumentationszwecken gespeichert werden.

Bei Ausgestaltungen des Verfahrens wird die Schweißnaht mit Ultraschall, Röntgen, einer Wirbelstrommessung oder anderen zerstörungsfreien Messverfahren überprüft. Die Ergebnisse der Überprüfung können bspw. zur Steuerung der in die Schweißstelle eingebachten Energie und/oder der Zuführgeschwindigkeit genutzt werden.

Bei Ausgestaltungen des Verfahrens wird eine auf das flache Band aus NE-Metall und/oder auf das verschweißte Hohlprofil wirkende Zugkraft bestimmt, und anhand der zuvor bestimmten Zugkraft werden Antriebe geregelt, die das flache Band dem Umformen und/oder dem Schweißen zuführen und/oder das verschweißte Hohlprofil einer Aufnahmevorrichtung zuführen. Eine zu große Zugkraft kann insbesondere bei zugeführten Bändern mit sehr kleiner Dicke zum Reißen des Bandes führen, wodurch der Prozess unterbrochen würde. Ähnliches gilt für die auf das verschweißte Hohlprofil wirkende Zugkraft.

Eine erfindungsgemäße Vorrichtung zur kontinuierlichen Herstellung abschnittsweise gewellter, dünnwandiger, radial geschlossener Hohlprofile aus NE-Metallen umfasst eine zum Zuführen eines flachen Bandes des NE-Metalls eingerichtete Zuführeinrichtung. Die Zuführeinrichtung kann bspw. eine Halterung für ein auf einer Spule oder einem Coil aufgewickeltes flaches Band des NE-Metalls umfassen. Das Band wird von der Spule abgewickelt und einer Umformvorrichtung zugeführt, welche das flache Band aus NE-Metall so in das Profil des Hohlprofils umformt, dass die gegenüberliegenden Kanten des flachen Bandes des NE-Metalls bündig stumpf aneinanderstoßen. Die Umformvorrichtung kann bspw. mehrere Rollen und Profile aufweisen, bspw. Ziehsteine, welche das Band beim Durchlaufen in Längsrichtung zu dem gewünschten Hohlprofil umformen. Die Umformvorrichtung kann außerdem zwei oder mehr in Längsrichtung des umgeformten Bandes bzw. Hohlprofils voneinander beabstandete Führungsmittel aufweisen, zwischen welchen die Kanten zumindest an einer zu verschweißenden Stelle bündig aneinander anliegend gehalten werden. Ggf. kann das Band an ein oder mehreren Stellen vor und im Werkzeug seitlich geführt werden um seitliche Bewegung des Bandes zu minimieren.

Die Vorrichtung umfasst ferner eine Schweißvorrichtung, welche die zwischen den Führungsmitteln bündig aneinander liegenden Kanten miteinander verschweißt. Die Schweißvorrichtung umfasst einen Laser, der Licht einer Wellenlänge kleiner 600 nm mit einer Energie ausstrahlt, die ein lokales Schmelzen des NE-Metalls zu beiden Seiten der Kanten bewirkt. Durch den kontinuierlichen Vorschub des umgeformten und verschweißten Hohlprofils gelangen Bereiche, in denen das Material geschmolzen ist, aus dem Bereich heraus, in welchem der Laser das Material erhitzt, und das geschmolzene Material erstarrt wieder. Die in das Material zu dessen Erhitzung eingebrachte Energie ist auf das Material, dessen Dicke sowie die Geschwindigkeit abgestimmt, mit der das Hohlprofil an der Schweißstelle vorbeigeführt wird, so dass das Material in einem unmittelbar an die bündig aneinander liegenden Kanten liegenden Bereich zwar geschmolzen wird, aber kein flüssiges Material in das Innere des Hohlprofils hineinläuft. Über die Führungsmittel kann der Abstand zwischen einer Optik des Lasers und den zu verschweißenden Kanten des Hohlprofils konstant gehalten werden. Um die Position der aneinander liegenden Kanten in Bezug auf die Optik des Lasers konstant zu halten kann vor den Führungsmitteln, die den Längsschlitz schließen, ein sogenanntes Schwert in dem zwischen den Kanten liegenden Längsschlitz angeordnet sein, um ein spiralförmiges Verdrehen zu verhindern.

Die Vorrichtung umfasst zudem eine oder mehrere Vorschubeinrichtungen, welche das verschweißte Hohlprofil zu einem Weller oder Corrugator weiterbefördern, der in das Hohlprofil eine Schrauben- oder Parallelwellung einbringt. Der Weller oder Corrugator ist dabei für eine variable Zustellung des Wellwerkzeugs eingerichtet, so dass gewellte Rohrabschnitte selektiv eingebracht werden können, also Rohrabschnitte mit Wellung und glatte Rohrabschnitte im Wechsel vorliegen. Das abschnittsweise gewellte Hohlprofil wird dann zu einer Aufnahmeeinrichtung weiterbefördert, die das Hohlprofil aufnimmt. Die Vorschubeinrichtung kann beispielsweise einen oder mehrere Spannzangenabzüge, Stollenabzüge, Scheibenabzüge oder Bandabzüge bekannter Bauart umfassen, wobei auch unterschiedliche Vorschubeinrichtungen kombiniert sein können.

Bei einer oder mehreren Ausgestaltungen der Vorrichtung ist vor der Umformvorrichtung eine Messvorrichtung zur Ermittlung der Zugkraft vorgesehen. Die ermittelte Zugkraft kann einer Regelung als Istwert zugeführt werden und mit einem Sollwert zur Regelung der Antriebe der Vorrichtung eingesetzt werden, etwa um die Geschwindigkeit der Zuführung des Bandes aus NE-Metall zu regeln. Außerdem kann eine Mess- und/oder Regelvorrichtung hinter der Schweißeinrichtung angeordnet sein, welche die auf das verschweißte Hohlprofil ausgeübte Zugkraft misst und/oder den Antrieb der Vorschubeinrichtung regelt, welche das verschweißte Hohlprofil der Aufnahmeeinrichtung zuführt. Die Regelung der Ziehkraft zwischen der Vorschubeinrichtung und der Aufnahmeeinrichtung kann bspw. durch einen Tänzer erfolgen, der ein Durchhängen des verschweißten Hohlprofils erfasst und einer Antriebssteuerung der Aufnahmeeinrichtung entsprechende Signale zuführt.

Bei einer oder mehreren Ausgestaltungen umfasst die Vorrichtung außerdem eine vor der Umformeinrichtung angeordnete Schneideeinrichtung, mittels derer eine oder beide Kanten des zugeführten flachen Bandes aus NE-Metall beschnitten werden, wobei die Breite des beschnittenen Bandes dem Umfang des Hohlprofils entspricht. Bei diesen Ausgestaltungen können ohne großen Aufwand Hohlprofile mit unterschiedlichen Umfängen hergestellt werden, indem das zugeführte Metallband auf die erforderliche Breite zugeschnitten und die weiteren Werkzeuge der Vorrichtung angepasst werden.

An einer oder beiden Kanten des Bandes abgeschnittene Teile können bei einer oder mehreren Ausgestaltungen einer zur Aufnahme von Schnittresten vorgesehenen Vorrichtung zugeführt werden.

Bei einer oder mehreren Ausgestaltungen der mit einer Schneideeinrichtung ausgestatteten Vorrichtung ist hinter der Schneideeinrichtung eine Messeinrichtung zur Messung der Breite des zugeschnittenen Bandes vorgesehen. Anhand der Messwerte kann die Schneideeinrichtung angesteuert werden, um eine gewünschte Breite des NE-Metallbandes über einen langen Zeitraum einzuhalten. Der Schneideeinrichtung können entsprechende Vorgabewerte zugeführt werden, mit denen die gemessene Breite des NE-Metallbandes verglichen werden um ein Steuersignal für die Einstellung der Schneideeinrichtung zu erzeugen. Die Breite entspricht etwa dem Umfang des Hohlprofils entlang der neutralen Faser.

Bei einer oder mehreren Ausgestaltungen umfasst die Vorrichtung außerdem eine Messeinrichtung zur Bestimmung eines Temperaturprofils quer zu der Schweißnaht. Das gemessene Temperaturprofil kann der Schweißvorrichtung zur Steuerung der abgegebenen Energie, der Zuführeinrichtung und/oder der Vorschubeinrichtung zur Steuerung der Zuführgeschwindigkeit zugeführt werden.

Bei einer oder mehreren Ausgestaltungen umfasst die Vorrichtung außerdem eine Messeinrichtung zur Messung mindestens einer Abmessung des Hohlprofils nach dem Verschweißen. Diese Messeinrichtung kann zur integrierten Qualitätskontrolle eingesetzt werden, genauso wie eine bei einer oder mehreren Ausgestaltungen vorgesehene Messeinrichtung zur Prüfung der Schweißnaht und/oder von Materialfehlern bzw. Inhomogenitäten des Materials. Die Abmessungen können vorzugsweise berührungslos gemessen werden, bspw. mittels Laser

Die direkte und kontinuierliche Fertigung des abschnittsweise gewellten Rohres mit dem gewünschten Durchmesser und der gewünschten geringen Wanddicke reduziert in vorteilhafter Weise die bislang erforderlichen zusätzlichen Herstellungsschritte die beispielsweise bei der Herstellung von Rohrsystemen mit vielen Richtungswechseln der Rohre erforderlich sind, etwa bei der Herstellung von Wärmetauschern.

In festgelegten Abständen voneinander entlang des Hohlprofils angeordnete gewellte Bereiche können bei der Herstellung von Rohren für Wärmetauscher vorteilhaft sein. Die glatten Abschnitte können dabei in dem Wärmetauscher liegen, bspw. mit flächigen Elementen verschweißt sein oder bündig thermisch gekoppelt daran anliegen, welche die wirksame Oberfläche des Wärmetauschers vergrößern, während die Rohre in den gewellten Bereichen gebogen sind, um eine serpentinenartige Führung der Rohre an oder in den flächigen Elementen zu ermöglichen. Das Biegen insbesondere von sehr dünnwandigen Rohren führt häufig zu unerwünschtem Abknicken und der damit einhergehenden unerwünschten Profilverengung; außerdem kann an einer Knickstelle die Dichtigkeit eines Rohrs nicht mehr gewährleistet werden. Eine beim Biegen dünnwandiger Rohre häufig genutzte Abstützung von der Innenseite des Rohres ist bei der erfindungsgemäßen kontinuierlichen Herstellung des Rohres nicht nutzbar. In den gewellten Bereichen können aber auch dünnwandige Rohre definiert gebogen werden, ohne den Querschnitt unkontrolliert zu verändern. Da die Rohre zusammen mit den gewellten Bereichen in einem Herstellvorgang kontinuierlich hergestellt werden können entfällt das bislang notwendige Verbinden gerader Rohrabschnitte mit gebogenen Rohrabschnitten, mit denen ein Richtungswechsel erreicht wird.

Die Wellung kann optional auch in geraden Abschnitten vorgesehen sein, bspw. um Strömungsverhältnisse eines in dem Hohlprofil und/oder darum herum strömenden Fluids zu beeinflussen, oder um die für einen Wärmeübergang zur Verfügung stehende Oberfläche zu vergrößern.

Mit dem vorstehend beschriebenen Verfahren, bei dem Laserlicht mit Wellenlängen kleiner als 600 nm zum Verschweißen von dünnwandigem NE-Metallblechen genutzt wird, können auf einfache Weise Hohlprofile mit Wandstärken unter 0,15 mm und Durchmessern bzw. Abmessungen kleiner als 4 mm auf einem hohen Qualitätsniveau ohne aufwendige Nachbearbeitung hergestellt werden. Durch die Nutzung von Fokusdurchmessern des Laserstrahls von unter 400 µm wird beim kontinuierlichen Verschweißen eine ausreichend kleine Wärmeeinflusszone im Verhältnis zu den Abmessungen des Hohlprofils gewährleistet, so dass keine Materialabrisse auftreten und eine Schweißnaht erzeugt wird, die keine ausgeprägte Wulst auf der Rohrinnenseite aufweist. Wegen der direkten Herstellung des Hohlprofils aus NE-Metallbändern mit einer geringen Wandstärke kann auf ein anschließendes Ziehen des Rohres verzichtet werden.

Mit dem vorstehend beschriebenen Verfahren wurden in Versuchen ohne einen sich an das Verschweißen anschließenden Ziehprozess Kupferrohre mit einem Durchmesser von Ø 2,0 mm und einer Wandstärke von 0,10 mm bei Schweißgeschwindigkeiten größer 6 m/min hergestellt, wobei die Schweißnahtqualität über mehrere Stunden konstant gehalten werden konnte.

Die aus dem erfindungsgemäßen Verfahren resultierende hohe Schweißnahtqualität ermöglicht Zugspannungen senkrecht zur Schweißnaht, die den Festigkeitswerten des Grundwerkstoffes gleichkommt. Dies ermöglicht eine Druckbeaufschlagung in gleicher Höhe wie bei nahtlosen spannungsfrei geglühten Rohren identischer Durchmesser und Wandstärken.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: ein exemplarisches Beispiel des erfindungsgemäßen Verfahrens zur kontinuierlichen Herstellung abschnittsweise gewellter, dünnwandiger, radial geschlossener Hohlprofile,
- Fig. 2: ein exemplarisches Beispiel einer erfindungsgemäßen Vorrichtung zur kontinuierlichen Herstellung abschnittsweise gewellter, dünnwandiger, radial geschlossener Hohlprofile,
- Fig. 3: Bilder einer Schweißnaht eines nach dem erfindungsgemäßen Verfahren hergestellten Hohlprofils,
- Fig. 4: eine schematische Darstellung eines aus dem Stand der Technik bekannten Verfahrens zur Verringerung der Wanddicke und des Durchmessers eines Rohres,
- Fig. 5: eine schematische Darstellung eines abschnittsweise gewellten Rohres, und
- Fig. 6: eine beispielhafte schematische Darstellung eines Wärmetauschers mit einem nach dem erfindungsgemäßen Verfahren hergestellten abschnittsweise gewellten Rohr.

Gleiche oder ähnliche Elemente sind in den Figuren mit gleichen oder ähnlichen Bezugszeichen versehen.

### Ausführungsbeispiel

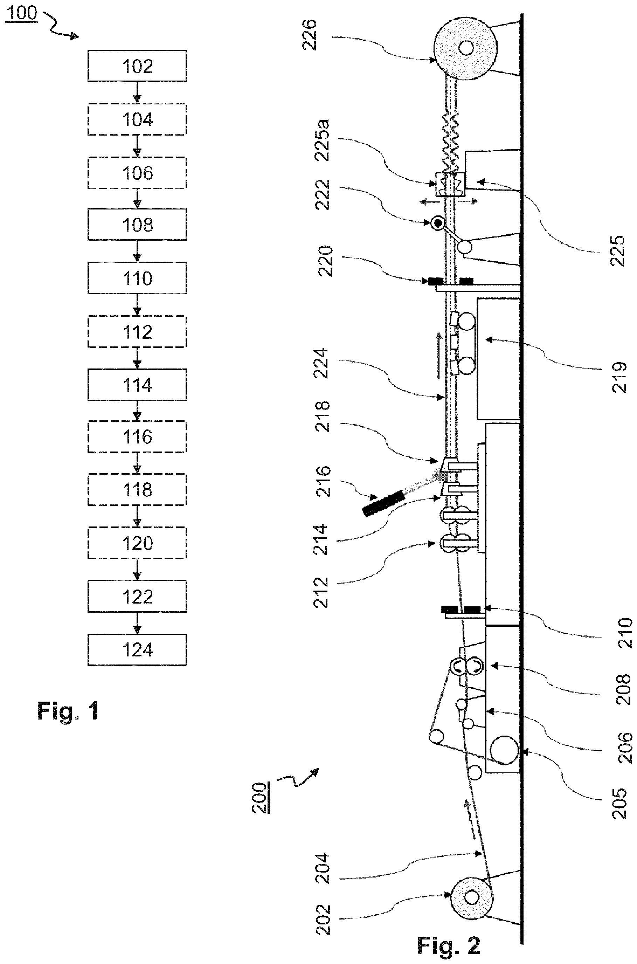

Figur 1 zeigt Schritte eines Verfahrens 100 zur Herstellung abschnittsweise gewellter, dünnwandiger, radial geschlossener Hohlprofile gemäß einem Aspekt der Erfindung. In Schritt 102 des Verfahrens wird ein flaches Band aus NE-Metall mit einer ersten Zuführgeschwindigkeit einer Umformvorrichtung zugeführt. Bspw. wird ein flaches Kupferband von einem Coil abgewickelt. In der Umformvorrichtung wird das zugeführte flache Band in Schritt 108 in eine dem gewünschten Hohlprofil entsprechende Form umgeformt, bspw. ein Rundrohr. Das Umformen kann bspw. mittels eines Roll-Formwerkzeugs erfolgen.

Vor dem Umformen kann in einer Schneideinrichtung ein optionaler Schritt 106 ausgeführt werden, in welchem eine oder beide Kanten des Bandes aus NE-Metall beschnitten oder auf andere Weise vorbereitet werden. Hierdurch kann auch bei schlechter Kantenqualität des Bandes aus NE-Metall die Breite des Bandes gleichmäßig und präzise eingestellt und ggf. und die Kanten für den anschließenden Schweißvorgang vorbereitet werden. Der Schneideinrichtung können Messwerte einer Messvorrichtung zugeführt sein, welche die Breite des NE-Metallbandes nach dem Beschneiden erfasst.

Beim Umformen werden die Kanten des Bandes mittels Führungselementen so geführt, dass ein Verdrehen vor dem Verschweißen verhindert wird, und die bündig aneinander liegenden Kanten in einer definierten Lage und einem definierten Abstand an einer Schweißvorrichtung vorbeigeführt werden. Die Führungselemente können bspw. ein oder mehrere Führungsschwerter und Führungsbuchsen umfassen, welche an die zu fertigende Hohlgeometrie angepasst sind. Das Schließen der Geometrie kann bspw. mittels Ziehsteinen erfolgen.

Nach dem Umformen liegen zwei gegenüberliegende Kanten des flachen Bandes in einem Kontaktbereich bündig aneinander an. In Schritt 110 werden die in dem Kontaktbereich bündig aneinander anliegenden Kanten kontinuierlich miteinander verschweißt. Das Verschweißen erfolgt mittels eines Lasers, der Licht einer Wellenlänge kleiner als 600 nm ausstrahlt. Ggfs. kann angepasst an die erforderliche Schweißnahtqualität eine Abdeckung der Schweißnaht mittels Schutzgas von der Außen- und/oder Innenseite des Hohlprofils erfolgen.

Nach dem Verschweißen wird das nunmehr radial geschlossene Hohlprofil aus dem Schweißbereich abgezogen, Schritt 114, und in Schritt 122 mittels eines Wellers oder Corrugators selektiv abschnittsweise gewellt, bevor es in Schritt 124 einer Aufnahmeeinrichtung zur Aufnahme zugeführt wird. Das Abziehen erfolgt mittels einer Vorschubeinrichtung, bspw. mittels Spannzangenabzug, Stollenabzug oder Bandabzug.

Zur Überwachung der Qualität der Schweißnaht kann in einem optionalen Schritt 112 das Temperaturprofil quer zur Schweißnaht bestimmt werden. Das ermittelte Temperaturprofil kann einer Steuerung des Lasers und anderer Elemente einer das Verfahren implementierenden Vorrichtung zugeführt werden, insbesondere auch einem oder mehreren Antrieben, welche die Zuführgeschwindigkeit des Bandes aus NE-Metall bzw. die Geschwindigkeit regeln, mit der das verschweißte Hohlprofil aus dem Schweißbereich abgezogen wird.

Das Verfahren kann optional auch eine Ermittlung der Zugkraft auf das Band vor dem Umformen, Schritt 104, und/oder auf das Hohlprofil nach dem Verschweißen, Schritt 120, umfassen. Die ermittelte Zugkraft kann ebenfalls den einem oder mehreren Antrieben als Messgröße zur Regelung zugeführt werden.

Das Verfahren kann außerdem einen optionalen Schritt 116 umfassen, in welchem eine oder mehrere Abmessungen des verschweißten Hohlprofils bestimmt werden. Die ermittelten Abmessungen können vor allem als Eingangsgrößen zur Regelung des Umformvorgangs und des Schneidvorgangs zur Einstellung der Breite des Bandes zugeführt werden.

Das Verfahren kann außerdem einen optionalen Schritt 118 umfassen, in dem die Qualität der Schweißnaht und/oder das Schweißgut zerstörungsfrei auf Materialfehler überprüft werden, bspw. mittels Wirbelstromprüfung, Ultraschall oder Röntgen.

Figur 2 zeigt ein exemplarisches Beispiel einer erfindungsgemäßen Vorrichtung zur kontinuierlichen Herstellung abschnittsweise gewellter, dünnwandiger, radial geschlossener Hohlprofile. Von einem Wickel oder Abwickler 202 wird ein dünnes Band 204 aus NE-Metall abgewickelt, bspw. ein Band aus Kupfer. Das Band 204 wird einem Roll-Formwerkzeug 212 zugeführt, mittels dessen es in die Form des gewünschten Hohlprofils gebracht wird, bspw. zu einem längsgeschlitzten Rund- oder Vierkantrohr geformt wird. Zwischen dem Wickel oder Abwickler 202 und dem Roll-Formwerkzeug 212 kann eine Schneidvorrichtung 208 vorgesehen sein, welche das Band 204 auf eine benötigte Breite zuschneidet bzw. eine oder beide Kanten des Bandes 204 zuschneidet, um saubere und glatte Kanten zu erhalten. Zur Aufnahme abgeschnittener Teile des Bandes 204 kann eine Aufnahmevorrichtung 205 vorgesehen sein. Die Breite des zugeschnittenen Bandes 204 kann in einer Bandbreiten-Messvorrichtung 210 überprüft werden. Die Messergebnisse können der Schneideeinrichtung 208 zur Regelung zugeführt sein. Außerdem kann zwischen dem Wickel oder Abwickler 202 und dem Roll-Formwerkzeug 212 eine Messvorrichtung 206 zur Ermittlung der Zugkraft angeordnet sein, deren Messwerte bspw. zur Regelung von Antrieben der Vorrichtung verwendet werden können. Die nach dem Formen des Hohlprofils aneinander liegenden Kanten des Bandes können mit einem oder mehreren Führungselementen 214 vor der Laser-Schweißvorrichtung 216 so geführt werden, dass ein Verdrehen des Hohlprofils vor dem Schweißen verhindert wird und der Durchlaufabstand unterhalb einer Optik der Laser-Schweißvorrichtung 216 eingehalten wird. Die Führungselemente können ein oder mehrere Führungsschwerter und an das Hohlprofil angepasste Führungsbuchsen umfassen. Die Geometrie des zu verschweißenden Hohlprofils wird mittels Ziehsteinen oder Führungsbuchsen 218 geschlossen, so dass die Kanten des zu dem Hohlprofil umgeformten Bandes 204 im Bereich der Laser-Schweißvorrichtung 216 aneinander anliegen. Die Laser-Schweißvorrichtung 216 strahlt hochenergetisches Licht bei einer Wellenlänge kleiner als 600 nm aus, vorzugsweise in einem Bereich zwischen 550 und 450 nm. Auch Wellenlängen in einem Bereich unterhalb 450 nm können erfindungsgemäß vorteilhaft genutzt werde. Der Schweißbereich kann über eine in der Figur nicht dargestellte Schutzgasvorrichtung innerhalb oder außerhalb des Hohlprofils mit einem Schutzgas, bspw. Argon, abgedeckt werden, um Reaktionen des Schweißgutes mit der Atmosphäre zu unterbinden. Der Vorschub des verschweißten Hohlprofils 224 erfolgt mittels einer Vorschubeinrichtung 219. Die Vorschubeinrichtung 219 kann bspw. einen oder mehrere Spannzangenabzüge, Stollenabzüge, Scheibenabzüge oder Bandabzüge umfassen, oder Kombinationen davon. Nach dem Abziehen aus dem Schweißbereich können eine oder mehrere Abmessungen des Hohlprofils 224 mittels eines Messgeräts 220 erfasst werden, vorzugsweise berührungslos, bevor das verschweißte Hohlprofil 224 einem Weller 225 und danach einem Aufwickler 226 zugeführt wird. Zur Erfassung der auf das Hohlprofil 224 wirkendenden Zugkräfte kann eine weitere Zugkraft-Messvorrichtung 222 vor dem Weller 225 und dem Aufwickler 226 vorgesehen sein. Der vor dem Aufwickler 226 angeordnete Weller oder Corrugator 225 weist ein Wellwerkzeug 225a auf und ist dazu eingerichtet, selektiv abschnittsweise eine Parallel- oder Schraubenwellung in das Hohlprofil einzubringen.

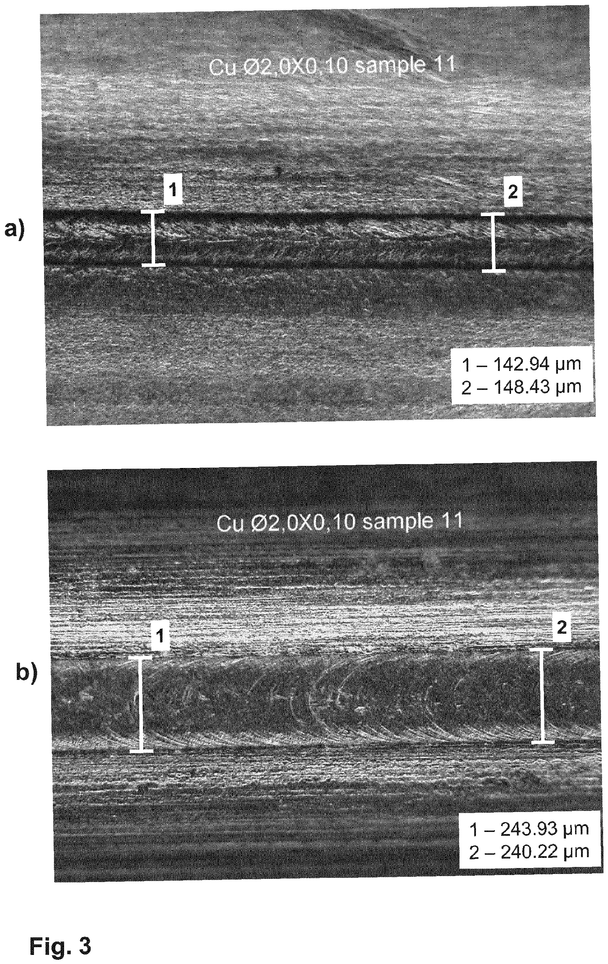

Figur 3 zeigt Bilder einer Schweißnaht eines nach dem erfindungsgemäßen Verfahren hergestellten Hohlprofils. Das Hohlprofil ist ein Kupferrohr mit einem Durchmesser von 2 mm und einer Wanddicke von 0,1 mm, das bei einer Vorschubgeschwindigkeit von 6 m/min kontinuierlich aus einem Kupferband umgeformt und verschweißt wurde. Die Schweißstelle war dabei innen und außen mit Argon abgedeckt. Figur 3 a) zeigt die Schweißnaht an der Außenseite des Hohlprofils, die eine Breite zwischen 140 und 150 µm aufweist. Figur 3 b) zeigt eine Aufnahme der Innenseite des Hohlprofils, auf der die Schweißnaht eine Breite von etwa 242 µm aufweist. Gut zu erkennen ist auch, dass die Schweißnähte sowohl innen als auch außen sehr gleichmäßig ausfallen, so dass eine Nachbearbeitung für die meisten Anwendungsfälle nicht erforderlich sein dürfte. Ein Abschnitt des verfahrensgemäß hergestellten Rohres wurde einem Drucktest unterzogen und hielt Drücken von über 200 bar stand.

Figur 4, die eine schematische Darstellung eines aus dem Stand der Technik bekannten Verfahrens zur Verringerung der Wanddicke und des Durchmessers eines Rohres zeigt, wurde bereits weiter oben mit Bezug auf den Stand der Technik beschrieben.

Figur 5 zeigt eine schematische Darstellung eines abschnittsweise gewellten Rohres 500. Rohr 500 weist zwei gewellte Bereiche 502 auf, zwischen denen ein nicht gewellter Bereich 504 liegt.

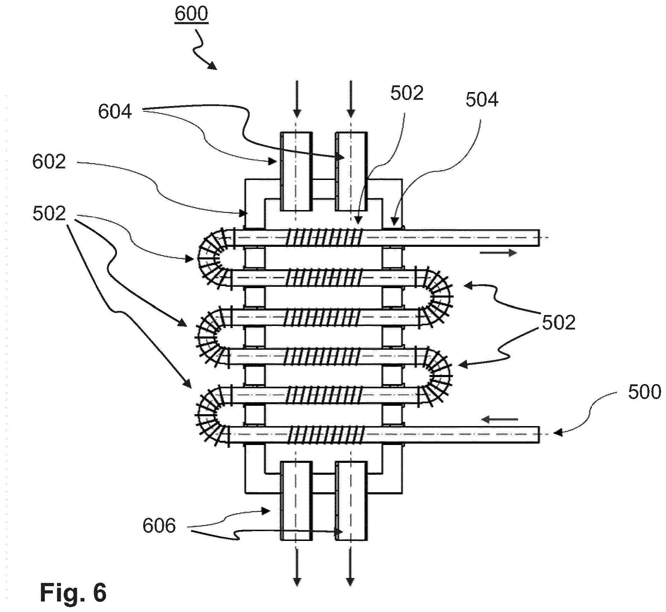

Figur 6 zeigt eine beispielhafte schematische Darstellung eines Wärmetauschers 600 mit einem nach dem erfindungsgemäßen Verfahren hergestellten abschnittsweise gewellten Rohr 500. Das in der Figur dargestellte Beispiel zeigt einen Kreuzstromwärmetauscher, aber auch andere Stromführungen wie Gleichstrom, Gegenstrom etc. sind mit dem erfindungsgemäß hergestellten, abschnittsweise gewellten Rohr realisierbar. Ein erfindungsgemäß in einem kontinuierlichen Prozess hergestelltes partiell gewelltes Rohr 500 wird in der Trennebene eines zweigeteilten Gehäuses 602 verlegt. Dabei werden nicht gewellte Abschnitte 504 in an den Durchmesser des Rohres 500 angepassten Ausnehmungen der Gehäusewand gelagert, beispielsweise in einer Buchse. In diesem nicht gewellten Bereich kann auch die Abdichtung zwischen Rohr und Gehäuse erfolgen. Zwischen den Lagerpunkten können gewellte Rohrbereiche 502 dazu genutzt werden, die für den Wärmeaustausch verfügbare Fläche zwischen einem durch Einlässe 604 in das Gehäuse 602 einströmenden warmen Medium und einem durch das Rohr 500 fließenden kalten Medium zu erhöhen. Zusätzlich begünstigt die Wellung die Bildung von Turbulenzen der fließenden Medien, was ebenfalls den Wärmeaustausch verbessert. Das Rohr 500 ist in mehreren serpentinenartig angeordneten Windungen mehrfach durch das Gehäuse 602 hindurchgeführt. Dazu ist es in gewellten Bereichen 502 entsprechend gebogen. Das zu kühlende Medium fließt durch Auslässe 606 aus dem Gehäuse heraus. Die Fließrichtung der Medien ist durch die Pfeile an den Einlässen und Auslässen des Gehäuses 602 bzw. des Rohres 500 angegeben. Durch die erfindungsgemäße einstückige Bauweise des Rohres 500 mit den glatten und den gewellten Abschnitten kann eine effiziente Kühlung des zu kühlenden Mediums erreicht werden, ohne Fügestellen zwischen den glatten und den gewellten Rohrabschnitten zu benötigen.

### Bezugszeichenliste

| | | | |
|---|---|---|---|
| 1 | Rohr | 222 | Zugkraft-Messvorrichtung |
| 2 | Form | 224 | verschweißtes Hohlprofil |
| 3 | Stopfen | 225 | Weller |
| 100 | Verfahren | 225a | Wellwerkzeug |
| 102 | Band zuführen | 226 | Aufwickler |
| 104 | Zugkraft bestimmen | 500 | Rohr |
| 106 | Kanten beschneiden | 502 | gewellter Bereich |
| 108 | Hohlprofil formen | 504 | nicht gewellter Bereich |
| 110 | Verschweißen | 600 | Wärmetauscher |
| 112 | Temperaturprofil bestimmen | 602 | Gehäuse |
| 114 | Hohlprofil abziehen | 604 | Einlass |
| 116 | Abmessungen bestimmen | 606 | Auslass |
| 118 | Qualität bestimmen | | |
| 120 | Zugkraft bestimmen | | |
| 122 | Wellen | | |
| 124 | zur Aufnahmeeinrichtung zuführen | | |
| 200 | Vorrichtung | | |
| 202 | Wickel/Abwickler | | |
| 204 | Band aus NE-Metall | | |
| 205 | Aufnahmevorrichtung für Verschnitt | | |
| 206 | Zugkraft-Messvorrichtung | | |
| 208 | Schneideeinrichtung | | |
| 210 | Bandbreiten-Messvorrichtung | | |
| 212 | Roll-Formwerkzeug | | |
| 214 | Führungselement | | |
| 216 | Laser-Schweißvorrichtung | | |
| 218 | Ziehstein/Führungsbuchsen | | |
| 219 | Vorschubeinrichtung | | |
| 220 | Messgerät | | |

## Patentansprüche

1. Verfahren (100) zur kontinuierlichen Herstellung abschnittsweise gewellter, radial geschlossener Hohlprofile (224) aus NE-Metallen mit einer Wandstärke von weniger als 0,15 mm, umfassend:
- Zuführen (102) eines flachen Bandes (204) des NE-Metalls mit einer ersten Zuführgeschwindigkeit zu einer Umformvorrichtung (212), wobei die Dicke des Bandes der Wandstärke des herzustellenden Hohlprofils (224) entspricht,
- kontinuierliches Umformen (108) des zugeführten flachen Bandes (204) in eine dem Hohlprofil (224) entsprechende Form, wobei zwei gegenüberliegende Kanten des flachen Bandes (204) nach dem Umformen in einem sich in Längsrichtung des Hohlprofils erstreckenden Kontaktbereich bündig aneinander anliegen,
- kontinuierliches Verschweißen (110) der in dem Kontaktbereich bündig aneinander anliegenden Kanten ohne vorherige Behandlung zur Reduzierung von Reflexionen, wobei die zu verschweißenden Kanten mit der ersten Zuführgeschwindigkeit an einem in Bezug auf eine das Verfahren implementierende Vorrichtung (200) feststehenden Schweißbereich vorbeigeführt werden, und wobei ein Punkt in dem Schweißbereich mittels eines Lasers (216) erhitzt wird, welcher Licht einer Wellenlänge kleiner als 600 nm abstrahlt, und wobei der erhitzte Punkt einen Durchmesser aufweist, der kleiner als 20% der Querschnittsabmessung des Hohlprofils ist,
- Abziehen (114) des verschweißten Hohlprofils (224) aus dem Schweißbereich,
- selektives Einbringen (122) von Abschnitten mit einer Wellung in das verschweißte Hohlprofil, und
- Aufnehmen (124) des verschweißten und selektiv gewellten Hohlprofils (224) in einer Aufnahmeeinrichtung (226).

2. Verfahren (100) nach Anspruch 1, wobei zumindest der Schweißbereich beim Erhitzen mit einem inerten Schutzgas innen und/oder außen umströmt oder abgedeckt ist.

3. Verfahren (100) nach Anspruch 1 oder 2, außerdem umfassend:
- Beschneiden (106) einer oder zweier Kanten des flachen Bandes des NE-Metalls vor dem Umformen.

4. Verfahren (100) nach Anspruch 3, außerdem umfassend:
- Messen der Breite des beschnittenen Bandes des NE-Metalls vor und/oder Messen (116) zumindest einer Abmessung des Hohlprofils (224) nach dem Verschweißen, und
- Regeln der Schnittbreite und/oder Ansteuern einer Vorrichtung (212) zum Umformen in Abhängigkeit von dem Messergebnis und einem Vorgabewert.

5. Verfahren (100) nach einem der vorhergehenden Ansprüche, außerdem umfassend:
- Messen (112) des Temperaturprofils quer zu der Schweißnaht und steuern der in den Schweißbereich eingebrachten Energie in Abhängigkeit von einem Vergleich des Temperaturprofils mit einem Vorgabeprofil.

6. Verfahren (100) nach einem der vorhergehenden Ansprüche, außerdem umfassend:
- Überprüfen (118) der Schweißnaht mittels Ultraschall, Wirbelstrommessung und/oder Röntgen.

7. Verfahren (100) nach einem der vorhergehenden Ansprüche, außerdem umfassend:
- Bestimmen (104, 120) der Zugkraft auf das flache Band des NE-Metalls und/oder das verschweißte Hohlprofil, und
- Regeln von Antrieben, die das flache Band und/oder das verschweißte Hohlprofil dem Umformen, dem Schweißen und/oder dem Aufnehmen in einer Aufnahmevorrichtung (226) zuführen.

8. Vorrichtung (200) zur kontinuierlichen Herstellung abschnittsweise gewellter, radial geschlossener Hohlprofile (224) aus NE-Metallen mit einer Wandstärke von weniger als 0,15 mm und Querschnitten kleiner als 4 mm, umfassend:
- eine zum Zuführen eines flachen Bandes (204) des NE-Metalls eingerichtete Zuführeinrichtung (202),
- eine Umformvorrichtung (212), welche das flache Band (204) aus NE-Metall so in das Profil des Hohlprofils (224) umformt, dass die gegenüberliegenden Kanten des flachen Bandes des NE-Metalls bündig stumpf aneinanderstoßen,
- zwei voneinander beabstandete Führungsmittel (214, 218), zwischen welchen die Kanten bündig aneinander anliegend gehalten werden,
- eine Schweißvorrichtung (216), welche die zwischen den Führungsmitteln (214, 218) bündig aneinander liegenden Kanten miteinander verschweißt, wobei die Schweißvorrichtung (216) einen Laser umfasst, welcher Laser geeignet ist, Licht einer Wellenlänge kleiner 600 nm mit einer Energie auszustrahlen, um ein lokales Schmelzen des NE-Metalls zu beiden Seiten der aneinanderstoßenden Kanten zu bewirken, und welcher Laser weiter geeignet ist, einen Punkt in dem Schweißbereich mit einem Durchmesser kleiner als 20% der Querschnittsabmessung des Hohlprofils zu erhitzen,
- eine Vorschubeinrichtung (219), welche das verschweißte Hohlprofil (224) weiterbefördert,
- einen Weller bzw. Corrugator (225), der dazu eingerichtet ist, selektiv abschnittsweise eine Schrauben- oder Parallelwellung in das verschweißte Hohlprofil (224) einzubringen, und
- eine Aufnahmeeinrichtung (226), die das selektiv gewellte Hohlprofil (224) aufnimmt.

9. Vorrichtung (200) nach Anspruch 8, außerdem umfassend:
- eine vor der Umformvorrichtung (212) angeordnete Messvorrichtung (206) zur Ermittlung der auf das zugeführte Band (204) wirkenden Zugkraft, wobei die ermittelte Zugkraft zur Steuerung von Antrieben der Vorrichtung (200) zugeführt sind.

10. Vorrichtung (200) nach Anspruch 8 oder 9, außerdem umfassend:
- eine hinter der Schweißvorrichtung (216) angeordnete Mess- und/oder Regeleinrichtung (220), welche die auf das verschweißte Hohlprofil (224) wirkende Zugkraft misst, wobei die gemessene Zugkraft einem Antrieb der Vorschubeinrichtung (219) zur Regelung zugeführt ist.

11. Vorrichtung (200) nach Anspruch 8, 9 oder 10, außerdem umfassend:
- eine vor der Umformeinrichtung (212) angeordnete Schneideeinrichtung (208), mittels derer eine oder beide Kanten des zugeführten flachen Bandes (204) aus NE-Metall beschnitten werden, wobei die Breite des beschnittenen Bandes dem Umfang des Hohlprofils (224) entlang der neutralen Faser entspricht.

12. Vorrichtung (200) nach Anspruch 11, außerdem umfassend:
- eine Vorrichtung (205) zur Aufnahme von Schnittresten.

13. Vorrichtung (200) nach Anspruch 11 oder 12, außerdem umfassend:
- eine hinter der Schneideeinrichtung (208) angeordnete Messeinrichtung (210) zur Messung der Breite des zugeschnittenen flachen Bandes aus NE-Metall.

14. Vorrichtung (200) nach einem oder mehreren der Ansprüche 8 bis 13, außerdem umfassend:
- eine Messeinrichtung zur Bestimmung eines Temperaturprofils quer zu der Schweißnaht, wobei das gemessene Temperaturprofil der Schweißvorrichtung (216) zur Steuerung der abgegebenen Energie und/oder der Zuführeinrichtung (202) und/oder der Vorschubeinrichtung (219) zur Steuerung der Zuführgeschwindigkeit zugeführt ist.

15. Vorrichtung (200) nach einem oder mehreren der Ansprüche 8 bis 14, außerdem umfassend:
- eine Messeinrichtung (220) zur Messung mindestens einer Abmessung des Hohlprofils (224) nach dem Verschweißen (110).

16. Vorrichtung (200) nach einem oder mehreren der Ansprüche 8 bis 15, außerdem umfassend:
- eine Messeinrichtung zur Prüfung der Schweißnaht und/oder von Materialfehlern bzw. Inhomogenitäten des Materials.

## Claims

1. A method (100) for the continuous production of sectionally corrugated, radially closed hollow profiles (224) made of non-ferrous metals with a wall thickness of less than 0.15 mm, comprising:
- feeding (102) a flat strip (204) of non-ferrous metal with a first feeding speed to a forming device (212), wherein the thickness of the strip corresponds to the wall thickness of the hollow profile (224) to be produced,
- continuous forming (108) of the fed flat strip (204) into a shape corresponding to the hollow profile (224), wherein two opposite edges of the flat strip (204) abut flush against one another after the forming in a contact region extending in the longitudinal direction of the hollow profile,
- continuous welding (110) of the edges abutting flush against one another in the contact region without previous treatment to reduce reflections, wherein the edges to be welded are moved at the first feeding speed past a welding region which is fixed with respect to a device (200) implementing the method, and wherein a point in the welding region is heated by means of a laser (216), which emits light of a wavelength less than 600 nm, and wherein the heated point has a diameter, which is less than 20% of the cross-sectional dimension of the hollow profile,
- removing (114) the welded hollow profile (224) from the welding region,
- selective introduction (122) of sections with a corrugation into the welded hollow profile, and
- reception (124) of the welded and selectively corrugated hollow profile (224) in a receiving device (226).

2. The method (100) according to claim 1, wherein at least the welding region is flowed around or covered by an inert protective gas on the inside and/or outside during the heating.

3. The method (100) according to claim 1 or 2, also comprising:
- trimming (106) one or two edges of the flat strip of the non-ferrous metal before the forming.

4. The method (100) according to claim 3, also comprising:
- measuring the width of the trimmed strip of the non-ferrous metal before and/or measuring (116) at least one dimension of the hollow profile (224) after the welding, and
- control of the cutting width and/or control of a device (212) for the forming in dependence on the measurement result and a preset value.

5. The method (100) according to any one of the preceding claims, also comprising:
- measuring (112) the temperature profile across the weld seam and controlling the energy introduced into the welding region in dependence on a comparison of the temperature profile with a preset value.

6. The method (100) according to any one of the preceding claims, also comprising:
- checking (118) the weld seam by means of ultrasound, eddy current measurement and/or X-ray.

7. The method (100) according to any one of the preceding claims, also comprising:
- determining (104, 120) the tensile force on the flat strip of the non-ferrous metal and/or the welded hollow profile, and
- control of drives that feed the flat strip and/or the welded hollow profile to the forming, the welding and/or the reception in a receiving device (226).

8. A device (200) for the continuous production of sectionally corrugated, radially closed hollow profiles (224) made of non-ferrous metals with a wall thickness of less than 0.15 mm and cross sections less than 4 mm, comprising:
- a feeding device (202) equipped to feed a flat strip (204) of non-ferrous metal,
- a forming device (212), which forms the flat strip (204) made of non-ferrous metal into the profile of the hollow profile (224) such that the opposite edges of the flat strip of the non-ferrous metal abut bluntly against one another,
- two guide means (214, 218) spaced apart from one another, between which the edges are held abutting flush against one another,
- a welding device (216), which welds together the edges abutting flush against one another between the guide means (214, 218), wherein the welding device (216) comprises a laser, which laser is suitable to emit light of a wavelength less than 600 nm with an energy, in order cause a local melting of the non-ferrous metal on both sides of the abutting edges, and which laser is further suitable to heat a point in the welding region with a diameter less than 20% of the cross-sectional dimension of the hollow profile,
- a feeding device (219), which further conveys the welded hollow profile (224),
- a corrugator (225), which is equipped to selectively introduce in sections a screw or parallel corrugation into the welded hollow profile (224), and
- a receiving device (226), which receives the selectively corrugated hollow profile (224).

9. The device (200) according to claim 8, also comprising:
- a measuring device (206) arranged in front of the forming device (212) for determining the tensile force acting on the fed strip (204), wherein the determined tensile force is fed to control drives of the device (200).

10. The device (200) according to claim 8 or 9, also comprising:
- a measuring and/or control device (220) arranged behind the welding dev ice (216), which measures the tensile force acting on the welded hollow profile (224), wherein the measured tensile force is fed to a drive of the feeding device (219) for control.

11. The device (200) according to claim 8, 9 or 10, also comprising:
- a cutting device (208) arranged in front of the forming device (212), by means of which one or both edges of the fed flat strip (204) made of non-ferrous metal are trimmed, wherein the width of the trimmed strip corresponds to the circumference of the hollow profile (224) along the neutral fiber.

12. The device (200) according to claim 11, also comprising:
- a device (205) for receiving cutting residues.

13. The device (200) according to claim 11 or 12, also comprising:
- a measuring device (210) arranged behind the cutting device (208) for measuring the width of the trimmed flat strip made of non-ferrous metal.

14. The device (200) according to one or more of claims 8 to 13, also comprising:
- a measuring device for determining a temperature profile across the weld seam, wherein the measured temperature profile is fed to the welding device (216) for controlling the energy delivered and/or to the feeding device (202) and/or the feeding device (219) for controlling the feed speed.

15. The device (200) according to any one or more of claims 8 to 14, also comprising:
- a measuring device (220) for measuring at least one dimension of the hollow profile (224) after the welding (110).

16. The device (200) according to one or more of claims 8 to 15, also comprising:
- a measuring device for checking the weld seam and/or material defects or inhomogeneities of the material.

## Revendications

1. Procédé (100) pour la fabrication en continu de profilés creux (224) ondulés à certains endroits et fermés radialement, en métaux non ferreux, avec une épaisseur de paroi inférieure à 0,15 mm, comprenant :
- l'introduction (102) d'une bande plate (204) du métal non ferreux, avec une première vitesse d'introduction, dans un dispositif de formage (212), dans lequel l'épaisseur de la bande correspond à l'épaisseur de paroi du profilé creux (224) à fabriquer,
- le formage en continu (108) de la bande plate (204) introduite en une forme correspondant au profilé creux (224), dans lequel deux arêtes opposées de la bande plate (204) s'appuient, après le formage, l'une contre l'autre de manière affleurante dans une zone de contact s'étendant dans la direction longitudinale du profilé creux,
- le soudage en continu (110) des arêtes s'appuyant l'une contre l'autre de manière affleurante dans la zone de contact sans traitement précédent afin de réduire les réflexions, dans lequel les arêtes à souder passent, avec la première vitesse d'introduction, dans une zone de soudage stationnaire par rapport à un dispositif (200) implémentant le procédé, et dans lequel un point dans la zone de soudage est chauffé au moyen d'un laser (216) qui émet une lumière d'une longueur d'onde inférieure à 600 nm et dans lequel le point chauffé présente un diamètre qui est inférieur à 20 % de la dimension de section transversale du profilé creux,
- le retrait (114) du profilé creux à souder (224) hors de la zone de soudage,
- la réalisation sélective (122) de portions avec une ondulation dans le profilé creux soudé et
- la prise en charge (124) du profilé creux soudé et ondulé de manière sélective (224) dans un dispositif de prise en charge (226).

2. Procédé (100) selon la revendication 1 dans lequel au moins la zone de soudage est enveloppée ou recouverte, à l'intérieur et/ou à l'extérieur lors du chauffage, avec un gaz protecteur inerte.

3. Procédé (100) selon la revendication 1 ou 2, comprenant en outre :
- la découpe (106) d'une ou de deux arêtes de la bande plate du métal non ferreux avant le formage.

4. Procédé (100) selon la revendication 3, comprenant en outre :
- la mesure de la largeur de la bande découpée du métal non ferreux avant le soudage et/ou mesure (116) d'au moins une dimension du profilé creux (224) après le soudage et
- la régulation de la largeur de coupe et/ou le contrôle d'un dispositif (212) pour le formage en fonction du résultat de mesure et d'une valeur prédéterminée.

5. Procédé (100) selon l'une des revendications précédentes, comprenant en outre :
- la mesure (112) du profil de température transversalement par rapport au cordon de soudure et contrôle de l'énergie apportée à la zone de soudage en fonction d'une comparaison du profil de température avec un profil prédéterminé.

6. Procédé (100) selon l'une des revendications précédentes, comprenant en outre :
- la vérification (118) du cordon de soudure au moyen d'ultrasons, d'une mesure des courants de Foucault et/ou de rayons X.

7. Procédé (100) selon l'une des revendications précédentes, comprenant en outre :
- la détermination (104, 120) de la force de traction sur la bande plate du métal non ferreux et/ou sur le profilé creux soudé et
- la régulation d'entraînements qui transportent la bande plate et/ou le profilé creux soudé vers le formage, le soudage et/ou la prise en charge dans un dispositif de prise en charge (226).

8. Dispositif (200) pour la fabrication en continu de profilés creux (224) ondulés à certains endroits et fermés radialement, en métaux non ferreux, avec une épaisseur de paroi inférieure à 0,15 mm et des sections transversales inférieures 4 mm, comprenant :
- un dispositif d'introduction (202) conçu pour l'introduction d'une bande plate (204) de métal non ferreux,
- un dispositif de formage (212) qui façonne la bande plate (204) en métal non ferreux dans le profil du profilé creux (224) de façon à ce que les arêtes opposées de la bande plate du métal non ferreux entrent en contact par aboutement l'une contre l'autre de manière affleurante,
- deux moyens de guidage (214, 218), distants entre eux, entre lesquels les arêtes sont maintenues en appui l'une contre l'autre de manière affleurante,
- un dispositif de soudage (216), qui soude entre elles les arêtes maintenues en appui l'une contre l'autre de manière affleurante entre les moyens de guidage (214, 218), dans lequel le dispositif de soudage (216) comprend un laser, ce laser étant conçu pour émettre une lumière d'une longueur d'onde inférieure à 600 nm avec une énergie provoquant une fusion locale du métal non ferreux des deux côtés des arêtes en aboutement et ce laser étant en outre conçu pour chauffer un point dans la zone de soudage avec un diamètre inférieur à 20 % de la dimension de section transversale du profilé creux,
- un dispositif d'avance (219), qui transporte le profilé creux (224) soudé plus loin,
- un dispositif d'ondulation ou une onduleuse (225) qui est conçue pour réaliser, de manière sélective, à certains endroits, une ondulation hélicoïdale ou parallèle dans le profilé creux (224) soudé et
- un dispositif de prise en charge (226), qui prend en charge le profilé creux (224) ondulé de manière sélective.

9. Dispositif (200) selon la revendication 8, comprenant en outre :
- un dispositif de mesure (206), disposé avant le dispositif de formage (212), pour la détermination de la force de traction agissant sur la bande (204) introduite, dans lequel la force de traction déterminée est utilisée pour le contrôle des dispositifs d'entraînement du dispositif (200).

10. Dispositif (200) selon la revendication 8 ou 9, comprenant en outre :
- un dispositif de mesure et/ou de régulation (220), disposé après le dispositif de soudage (216), qui mesure la force de traction agissant sur le profilé creux (224) soudé, dans lequel la force de traction mesurée est introduite dans un dispositif d'entraînement du dispositif d'avance (219) pour la régulation.

11. Dispositif (200) selon la revendication 8, 9 ou 10, comprenant en outre :
- un dispositif de coupe (208), disposé avant le dispositif de formage (212), au moyen duquel une ou les deux arêtes de la bande plate (204) en métal non ferreux introduite sont découpées, dans lequel la largeur de la bande découpée correspond à la circonférence du profilé creux (224) le long de la fibre neutre.

12. Dispositif (200) selon la revendication 11, comprenant en outre :
- un dispositif (205) pour la prise en charge des résidus de coupe.

13. Dispositif (200) selon la revendication 11 ou 12, comprenant en outre :
- un dispositif de mesure (210) disposé après le dispositif de coupe (208) pour al mesure de la largeur de la bande plate en métal ferreux découpée.

14. Dispositif (200) selon l'une ou plusieurs des revendications 8 à 13, comprenant en outre :
- un dispositif de mesure pour la détermination d'un profil de température transversalement par rapport au cordon de soudure, dans lequel le profil de température mesuré est introduit dans le dispositif de soudage (216) pour le contrôle de l'apport d'énergie et/ou dans le dispositif d'introduction (202) et/ou le dispositif d'avance (219) pour le contrôle de la vitesse d'introduction.

15. Dispositif (200) selon l'une ou plusieurs des revendications 8 à 14, comprenant en outre :
- un dispositif de mesure (220) pour la mesure d'au moins une dimension du profilé creux (224) après le soudage (110).

16. Dispositif (200) selon l'une ou plusieurs des revendications 8 à 15, comprenant en outre :
- un dispositif de mesure pour la vérification du cordon de soudure et/ou des défauts du matériau ou des inhomogénéités du matériau.
